# FASCICULE DE BREVET EUROPEEN

(11) **EP 0 939 013 B1**
(45) Date de publication et mention de la délivrance du brevet: **28.04.2004**
(21) Numéro de dépôt: 99400439.8
(22) Date de dépôt: 23.02.1999
(51) Int. Cl.: B60R 25/04

(54) **Procédé de déverrouillage de l'accès d'un outil de téléchargement d'un fichier, à un calculateur**
Verfahren zum Entriegeln des Zugriffs auf einen Rechner von einem Fernladungssystem einer Datei
Method of unlocking access to a computer using a remote file loading unit

(30) Priorité: 26.02.1998 FR 9802356
(43) Date de publication de la demande: 01.09.1999
(73) Titulaire: AUTOMOBILES PEUGEOT, 75116 Paris (FR); AUTOMOBILES CITROEN, 92200 Neuilly-sur-Seine (FR); Renault s.a.s., 92100 Boulogne Billancourt (FR)
(72) Inventeur: Loubeyre, Yves, 92380 Garches (FR); Abadie, Eric, 78470 St. Remy les Chevreuse (FR); Vaillard, Pierre, 91430 Igny (FR)
(74) Mandataire: Habasque, Etienne Joel Jean-François

(56) Documents cités:
- EP-A- 0 637 527
- EP-A- 0 682 315
- US-A- 4 931 664
- US-A- 5 703 413

## Description

La présente invention concerne un procédé de déverrouillage de l'accès d'un outil de téléchargement d'un fichier, à un calculateur de pilotage du fonctionnement d'au moins un organe fonctionnel d'un véhicule automobile.

Plus particulièrement, la présente invention concerne un procédé dans lequel le fichier à télécharger comprend entre autres des informations d'identification du calculateur dans lequel il doit être téléchargé et une clef d'accès à celui-ci et le calculateur comporte une unité à microprocesseur associé à des moyens de mémorisation dans lesquels sont stockées des informations d'identification du calculateur et une clef d'accès à celui-ci.

On connaît déjà dans l'état de la technique, des calculateurs de pilotage de ce type qui comportent une unité à microprocesseur associée à des moyens de mémorisation.

Les progrès de la technologie informatique ont permis par utilisation de circuits numériques de plus en plus performants, d'apporter beaucoup plus de souplesse à la réalisation des systèmes informatiques notamment embarqués à bord des véhicules automobiles.

Cependant, l'introduction croissante de programmes dans les équipements, s'accompagne de nouveaux problèmes liés à la nature spécifique du produit logiciel et à son élaboration.

La souplesse de modification est telle qu'elle absorbe la majeure partie des adaptations de système, mais cette souplesse n'est qu'apparente car une modification mineure de code peut avoir des répercutions sur l'ensemble du logiciel.

Les problèmes de maintenance des logiciels sont d'un ordre différent de ceux du matériel.

En effet, un logiciel ne tombe pas en panne, mais il faut pour le corriger ou le modifier le même niveau de compétence que pour l'élaborer.

Or, la structure actuelle des calculateurs et les méthodes d'accès à ceux-ci sont telles que ceux-ci ne sont pas protégés efficacement contre des modifications de programmes non autorisées.

Pour résoudre ces problèmes, le document FR-A-2 719 924 propose un procédé de déverrouillage de l'accès d'un outil de téléchargement d'un fichier, à un calculateur de pilotage du fonctionnement d'au moins un organe fonctionnel d'un véhicule automobile, dans lequel le fichier à télécharger comprend entre autres des informations d'identification du calculateur dans lequel il doit être téléchargé et une clef d'accès à celui-ci et le calculateur comporte une unité à microprocesseur associée à des moyens de mémorisation dans lesquels sont stockées des informations d'identification du calculateur et une clef d'accès à celui-ci, comportant les étapes de:
- transmission par le calculateur d'au moins certaines des informations d'identification stockées dans les moyens de mémorisation de celui-ci, à destination de l'outil de téléchargement ;
- vérification par l'outil de téléchargement de la cohérence entre les informations d'identification transmises par le calculateur et les informations d'identification correspondantes contenues dans le fichier à télécharger ;
- en cas de cohérence entre ces informations, génération par l'outil de téléchargement d'une demande de déverrouillage du calculateur ;
- en réponse à cette demande, génération par le calculateur, d'un nombre aléatoire et calcul à l'aide d'une relation déterminée d'un premier code de déverrouillage à partir de ce nombre aléatoire et de la clef d'accès stockée dans les moyens de mémorisation de celui-ci ;
- émission par le calculateur, à destination de l'outil de téléchargement, du nombre aléatoire ;
- calcul par celui-ci, à l'aide de la relation déterminée, d'un second code de déverrouillage à partir du nombre aléatoire fourni par le calculateur et de la clef d'accès contenue dans le fichier à télécharger ;
- transmission par l'outil de téléchargement de ce second code de déverrouillage à destination du calculateur ;
- comparaison par le calculateur des premier et second codes de déverrouillage ; et
- en cas de correspondance entre les premier et second codes, déverrouillage du calculateur, pour permettre l'accès à celui-ci par l'outil de téléchargement.

Le but de l'invention est de perfectionner ce procédé pour améliorer sa résistance aux manipulations frauduleuses.

A cet effet, l'invention a pour objet un procédé tel que décrit précédemment, caractérisé en ce qu'il comporte l'étape supplémentaire d'enclenchement du fonctionnement de moyens temporisés d'inhibition du déverrouillage du calculateur pendant une période de temps prédéterminée, en cas de discordance entre les premier et second codes.

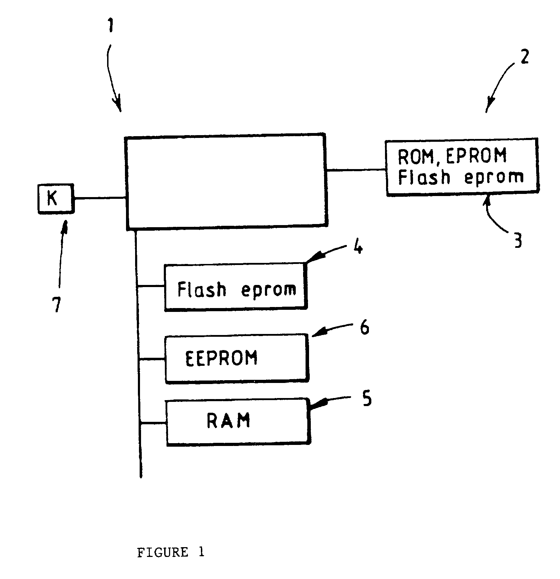

L'invention sera mieux comprise à la lecture de la description qui va suivre, donnée uniquement à titre d'exemple et faite en se référant au dessin annexé qui représente un schéma synoptique illustrant la structure d'un calculateur de pilotage.

On reconnaît sur cette figure, un calculateur de pilotage d'au moins un organe fonctionnel d'un véhicule automobile, du type comportant une unité à microprocesseur désignée par la référence générale 1 associée à des moyens de mémorisation 2.

Ce calculateur peut aussi bien être un calculateur de contrôle du fonctionnement du moteur du véhicule, qu'un calculateur de commande de boîte de vitesses électronique, de contrôle de suspension, de climatisation ou encore d'ordinateur de bord.

Tous ces systèmes embarqués sur véhicule, peuvent en effet présenter une structure basée sur l'emploi d'un microprocesseur ou d'un microcontrôleur associé à des mémoires.

Les moyens de mémorisation 2 comprennent par exemple :
1) une mémoire non volatile 3 adaptée pour stocker un programme de démarrage du calculateur,
2) une mémoire flash 4 adaptée pour stocker au moins un programme d'application pour l'organe fonctionnel,
3) au moins une mémoire de données 5, et
4) une mémoire non volatile électriquement programmable 6 adaptée pour stocker des informations d'identification du calculateur et dudit au moins un programme d'application.

Le calculateur doit en effet contenir un programme de démarrage ou de "BOOT" implanté dans une mémoire non volatile de type EEPROM ou flash paginée du coeur numérique afin de permettre par exemple le lancement d'un téléchargement du programme d'application dans le calculateur.

La mémoire de programme d'application correspond à une zone de stockage du programme qui permet au calculateur électronique d'assurer la fonction pour lequel il a été conçu.

Il inclut aussi bien le programme que les données ainsi que les calibrations.

La mémoire de données 5 est en fait une zone de données correspondant à la place de mémoire nécessaire au traitement des caractères reçus, par exemple sur une ligne de diagnostic du véhicule et au programme de téléchargement de celui-ci.

La mémoire non volatile électriquement programmable 6 de stockage des informations d'identification du calculateur est utilisée dans la mesure où le calculateur doit posséder une zone d'identification contenant les paramètres nécessaires d'une part à l'identification du calculateur et d'autre part, à l'identification du programme d'application.

Pour les calculateurs munis d'une mémoire EEPROM, la zone d'identification est stockée dans cette mémoire afin d'être sauvegardée en permanence, tandis que pour les autres calculateurs, elle est stockée directement dans la mémoire Flash EPROM.

Cette zone d'identification comporte par exemple les informations suivantes :

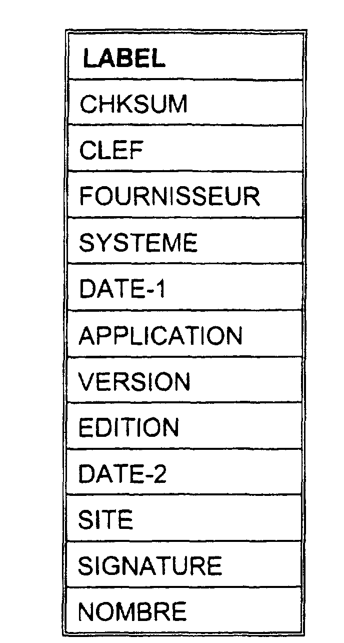

Cette zone d'identification comporte en fait par exemple les zones suivantes :
1) CHKSUM qui correspond à une zone de somme de contrôle de la mémoire Flash après téléchargement du code et cette information peut être donnée sur 16 bits.
   La zone d'identification n'est pas intégrée dans le calcul de la somme de contrôle. Cette zone peut contenir le complément à deux du modulo 65536 de la somme des octets téléchargés.
   Après téléchargement, le calculateur doit calculer sa somme de contrôle qui additionnée à la somme de contrôle de la zone d'identification doit être égale à zéro.
   Cette zone n'est pas nécessaire si d'autres moyens de contrôle sont utilisés.
2) CLEF qui correspond à une zone de clef d'accès au calculateur. Cette information sur 16 bits par exemple, donne la clef d'accès au programme de téléchargement et cette clef est inopérante lorsque sa valeur est égale par exemple à FFFF, ce qui lorsqu'elle est modifiée, ne permet plus de revenir à sa valeur inopérante.
3) FOURNISSEUR qui correspond à une zone d'identification du fournisseur du calculateur codée par exemple sur 8 bits et qui permet d'identifier celui-ci à partir d'une logique de codage déterminée quelconque.
4) SYSTEME qui correspond à une zone d'identification de la famille du calculateur, c'est à dire la définition du matériel de cette famille, codée par exemple sur 8 bits.
5) DATE-1 qui correspond à une zone d'indication de la date de fabrication du calculateur, par exemple sur trois octets. Le premier octet peut indiquer le jour du mois de fabrication, le second, le mois de l'année, et le troisième, l'année du siècle.
6) APPLICATION qui correspond à une zone d'identification du type d'application, codée par exemple sur 8 bits, auquel est destiné le programme d'application et qui correspond à une version de matériel différente pour un système donné.
7) VERSION qui correspond à une zone d'identification de la version du programme d'application stocké, c'est à dire une information codée sur 8 bits par exemple, qui caractérise la version du logiciel qui fonctionne dans le calculateur.
8) EDITION qui correspond à une zone d'indication de l'état de modification du programme d'application stocké, codée par exemple sur 16 bits. Le poids fort de cette zone peut correspondre à l'état de modification du logiciel, tandis que le poids faible peut correspondre à l'état de modification de la calibration.
   Pour les calculateurs qui n'utilisent pas d'indices de calibration, le poids faible peut être forcé à zéro.
9) DATE-2 qui correspond à une zone d'indication de la date de chargement de la version/Edition du programme d'application stocké. Cette information par exemple sur trois octets identifie la dernière date de programmation ou de reprogrammation de la version/Edition du programme du calculateur. Le codage de cette zone est identique à celui de la zone DATE-1.
10) SITE qui correspond à une zone d'identification du site où s'est produit le premier chargement d'un programme d'application dans la mémoire Flash, qui peut se présenter sous la forme d'une information sur 8 bits, codée de manière déterminée quelconque pour identifier ce site.
11) SIGNATURE qui correspond à une zone d'identification de la signature du site où s'est produit le chargement du programme d'application stocké, codée d'une manière déterminée quelconque sur trois octets pour identifier le lieu de reprogrammation du calculateur, et enfin
12) NOMBRE qui correspond à une zone d'indication du nombre de programmes d'application chargés dans la mémoire Flash. Cette information par exemple sur 8 bits identifie le nombre de programmes d'application qui ont été chargés dans ce calculateur et permet également d'identifier la présence d'un programme d'application.

Cette variable est gérée directement par le calculateur et permet à tout moment de connaître le nombre de programmations réellement effectuées sur le calculateur et permet par exemple d'identifier les programmations faites par des organismes non autorisés.

D'autres moyens de contrôle peuvent également être envisagés pour reconnaître de telles programmations frauduleuses.

Afin d'assurer le téléchargement d'un programme d'application dans les meilleures conditions, cette zone d'identification doit être programmée et/ou remise à jour de la manière suivante.

La programmation du calculateur peut en effet être découpée en trois phases distinctes qui sont pour la première, une phase correspond à une fabrication du calculateur associée à une première programmation par le fournisseur de celui-ci, pour la seconde, une phase qui peut être réalisée soit chez le fournisseur du calculateur, soit chez l'utilisateur et qui correspond à la programmation de la première application dans celui-ci, et enfin pour la troisième, une phase qui est réservée au service après-vente pour la gestion des évolutions de logiciel.

Pour la première phase de programmation chez le fournisseur du calculateur, celui-ci doit programmer une partie de la zone d'identification afin d'identifier le produit et ce d'une façon décrite dans le tableau suivant.

Dans ce tableau, les informations codées par le fournisseur sont notées X.

| **LABEL** | **VALEUR** | **REMARQUE** |
|---|---|---|
| CHKSUM | 0 | |
| CLEF | 0 | Autorisation d'écriture |
| FOURNISSEUR | XX | Code du fournisseur |
| SYSTEME | XX | |
| DATE-1 | XXXX | Date de fabrication |
| APPLICATION | XX | |
| VERSION | 0 | |
| EDITION | 0 | |
| DATE-2 | 0 | |
| SITE | FE | |
| SIGNATURE | 0 | |
| NOMBRE | FE | |

Une fois le calculateur livré par exemple chez un fabricant de véhicules automobiles, celui-ci est implanté sur véhicule et la seconde phase de programmation de celui-ci se produit par exemple sur la ligne de montage du véhicule.

Cette seconde phase de programmation permet de mettre en place le programme d'application.

Cette opération est par exemple réalisée par téléchargement de ce programme dans la mémoire correspondante du calculateur, par l'intermédiaire d'une ligne de téléchargement, notée 7 sur la figure. Cette ligne de téléchargement permet de charger au moins un programme d'application dans la mémoire Flash et de remettre à jour la zone d'identification dans la mémoire non volatile électriquement programmable.

Cependant, avant d'effectuer le téléchargement de ce code, l'outil de téléchargement correspondant doit corréler des paramètres de la zone d'identification du calculateur avec des paramètres à implanter et qui correspondent par exemple aux zones de SYSTEME et d'APPLICATION décrites précédemment.

En effet, ces paramètres SYSTEME et APPLICATION du code à implanter doivent être identiques à ceux stockés.

La zone d'identification est alors modifiée de la façon suivante, les modifications opérées lors de cette seconde phase de programmation étant notées Y.

| **LABEL** | **VALEUR** | **REMARQUE** |
|---|---|---|
| CHKSUM | YYYY | |
| CLEF | YYYY | |
| FOURNISSEUR | XX | Code du fournisseur |
| SYSTEME | XX | |
| DATE-1 | XXXXXX | Date de fabrication |
| APPLICATION | XX | |
| VERSION | YY | |
| EDITION | YY | |
| DATE-2 | YYYYYY | |
| SITE | YY | |
| SIGNATURE | 0 | |
| NOMBRE | 01 | Première programmation |

Il est impératif que la procédure de téléchargement modifie la zone d'identification pour la remettre à jour seulement après la transmission de données et le téléchargement du programme.

La troisième phase de programmation, par exemple en service après vente, ne diffère de la précédente que par le fait qu'elle s'effectue sur le véhicule par exemple en service après vente.

Avant d'effectuer le téléchargement du code, l'outil de téléchargement doit corréler certains des paramètres de la zone d'identification avec les paramètres à implanter.

Ces paramètres sont les paramètres de SYSTEME, d'APPLICA-TION, de VERSION et d'EDITION.

Les paramètres de SYSTEME, d'APPLICATION et de VERSION du code à implanter devront être identiques à ceux correspondants stockés, tandis que le paramètre d'EDITION du code à implanter devra être strictement supérieur au paramètre d'EDITION stocké de la zone d'identification.

Dans le cas de calculateurs de contrôle du fonctionnement des moteurs reliés à un clavier d'antidémarrage codé, il interdit, une fois verrouillé, toute communication avec les lignes de téléchargement, de sorte qu'il est nécessaire de réaliser un déverrouillage préalable du calculateur par ce clavier d'antidémarrage codé.

La troisième phase de programmation se traduit par les modifications suivantes de la zone d'identification (modifications notées Z).

| **LABEL** | **VALEUR** | **REMARQUE** |
|---|---|---|
| CHKSUM | ZZZZ | |
| CLEF | YYYY | |
| FOURNISSEUR | XX | Code du fournisseur |
| SYSTEME | XX | |
| DATE-1 | XXXXXX | Date de fabrication |
| APPLICATION | XX | |
| VERSION | YY | |
| EDITION | ZZ | |
| DATE-2 | ZZZZZZ | |
| SITE | ZZ | |
| SIGNATURE | ZZZZZZ | |
| NOMBRE | ZZ | Incrémentation Z=Y+1 |

Une autre programmation peut également être réalisée lors de l'implantation d'un calculateur de rechange.

Le calculateur ne possédant à l'origine que l'étiquette du fournisseur, une seconde étiquette est adjointe par les services après vente lors de la programmation de ce calculateur de rechange.

Cependant, cette programmation d'un calculateur de rechange ne diffère pas des procédures décrites précédemment et seule la zone d'identification est modifiée, et se présente de la façon suivante (modifications notées W).

| **LABEL** | **VALEUR** | **REMARQUE** |
|---|---|---|
| CHKSUM | WWWW | |
| CLEF | WWWW | |
| FOURNISSEUR | XX | Code du fournisseur |
| SYSTEME | XX | |
| DATE-1 | XXXXXX | Date de fabrication |
| APPLICATION | XX | |
| VERSION | WW | |
| EDITION | WW | |
| DATE-2 | WW | |
| SITE | FD | |
| SIGNATURE | WWWWW W | |
| NOMBRE | 01 | Première programmation |

On conçoit alors que la structure du calculateur permet une remise à niveau très simple du ou des programmes d'application chargés dans celui-ci et une remise à jour de la zone d'identification.

Le téléchargement de ces différentes informations peut par exemple être réalisé par l'intermédiaire d'un outil de téléchargement connecté à une ligne de téléchargement quelconque raccordée à l'ensemble à microprocesseur.

Cet outil de téléchargement comporte donc en mémoire les différentes informations nécessaires à ce téléchargement, c'est-à-dire les informations d'identification du calculateur et la clef d'accès à celui-ci, le nouveau programme d'application pour l'organe fonctionnel, à télécharger dans la mémoire flash du calculateur et les informations de remise à jour de la zone d'identification du calculateur et dudit au moins un programme d'application.

Cependant, pour éviter un effacement ou une reprogrammation parasite ou non-autorisé du calculateur, celui-ci doit posséder un certain nombre de sécurités n'autorisant cette reprogrammation que dans certaines conditions.

On conçoit alors que toute étape de reprogrammation de ce calculateur doit être précédée par une phase de déverrouillage de l'accès de l'outil de téléchargement d'un fichier quelconque à ce calculateur de pilotage.

Cette phase de déverrouillage de l'accès peut être illustrée par exemple par le tableau suivant, dans lequel la colonne de gauche explique les différentes opérations effectuées par le calculateur tandis que la colonne de droite explique les différentes opérations effectuées par l'outil de téléchargement.

| | **CALCULATEUR** | **OUTIL DE TELECHARGEMENT** |
|---|---|---|
| **1** | | Lecture du fichier à télécharger, extraction des données d'identification et de la **CLEF** d'accès au calculateur. |
| **2** | | Demande des informations d'identification du calculateur |
| **3** | Envoi des informations d'identification du calculateur | |
| **4** | | Vérification de la cohérence entre les informations du fichier et les informations du calculateur |
| **5** | | Demande de déverrouillage phase 1 |
| **6** | Génération d'un nombre aléatoire (**uuuu**) | |
| **7** | Lecture de la **CLEF** d'accès dans la zone d'identification du calculateur **(Z.I).** | |
| **8** | Avec la **CLEF** d'accès du calculateur et le nombre aléatoire (**uuuu**) calcul par la formule: **(F**_{**1**} **(CLEF), F**_{**2**}**(uuuu))** d'un premier code de déverrouillage (**wwww**) | |
| **9** | Envoi du nombre aléatoire **(uuuu)** | |
| **10** | | Avec la **CLEF** d'accès du fichier et le nombre aléatoire (**uuuu**) calcul par la formule : **(F**_{**1**} **(CLEF), F**_{**2**}**(uuuu))** d'un second code de déverrouillage **(vvvv)** |
| **11** | | Demande de déverrouillage phase 2, envoi du second code de déverrouillage |
| **12** | Comparaison du premier code de déverrouillage du calculateur (**wwww**) et du second code de déverrouillage de l'outil de téléchargement (**vvvv**) | |
| **13** | Si égalité alors déverrouillage de l'accès au calculateur Sinon le calculateur reste verrouillé et enclenchement de moyens temporisés d'inhibition du déverrouillage du calculateur pendant une période de temps prédéterminée. | |

Cette phase de déverrouillage comporte une première étape au cours de laquelle l'outil de téléchargement lit le fichier à télécharger et en extrait des données d'identification du calculateur et du programme d'application et la clef d'accès au calculateur.

Ensuite, se présente une étape de demande des informations d'identification du calculateur par l'outil de téléchargement.

Le calculateur transmet alors au moins certaines des informations d'identification stockées dans les moyens de mémorisation de celui-ci, à destination de l'outil de téléchargement.

Cet outil vérifie la cohérence entre les informations d'identification transmises par le calculateur et les informations d'identification correspondantes contenues dans le fichier à télécharger.

En cas de cohérence entre ces informations, l'outil de téléchargement génère une demande de déverrouillage du calculateur.

En réponse à cette demande, le calculateur génère un nombre aléatoire puis lit la clef d'accès contenue dans la zone d'identification du calculateur.

Ensuite ce calculateur, à l'aide d'une relation déterminée, calcule un premier code de déverrouillage à partir de ce nombre aléatoire et de la clef d'accès stockée dans les moyens de mémorisation de celui-ci.

Le calculateur émet ensuite à destination de l'outil de téléchargement, le nombre aléatoire.

L'outil de téléchargement calcule, à l'aide de la relation déterminée, un second code de déverrouillage à partir du nombre aléatoire fourni par le calculateur et de la clef d'accès contenue dans le fichier à télécharger.

Ensuite, ce second code de déverrouillage est transmis par l'outil de téléchargement à destination du calculateur, qui compare les premier et second codes de déverrouillage pour, en cas de correspondance entre ces premier et second codes, assurer son déverrouillage afin de permettre l'accès à celui-ci par l'outil de téléchargement.

Dans le cas contraire, c'est-à-dire lorsqu'il y a discordance entre le premier et le second codes, le calculateur reste verrouillé et on déclenche le fonctionnement de moyens temporisés d'inhibition du déverrouillage du calculateur pendant une période de temps prédéterminée qui peut par exemple être de l'ordre de 10 sec.

On conçoit que ceci permet de limiter les risques de manipulations frauduleuses du calculateur par balayage de code en imposant une temporisation entre deux tentatives de déverrouillage du calculateur.

Ces moyens d'inhibition comprennent alors par exemple un compteur intégré dans une mémoire non volatile du calculateur et plus particulièrement des moyens de mémorisation 2 associés à l'ensemble à microprocesseur de celui-ci et adapté pour décrémenter une temporisation de manière que ces moyens restent actifs même en cas de réinitialisation du calculateur.

Cette inhibition du déverrouillage du calculateur est obtenue par exemple en bloquant tout échange d'informations de celui-ci avec l'outil de téléchargement.

On conçoit alors que cette phase de déverrouillage du calculateur donne accès aux fonctions d'effacement de la mémoire flash pour le programme d'application, au téléchargement d'un nouveau programme d'application dans celle-ci et de mise à jour de la zone d'identification de ce calculateur et du programme d'application.

Ceci permet d'augmenter la sécurité de programmation de ces calculateurs et le déclenchement de cette phase de déverrouillage peut être conditionné au contrôle de l'état d'activation ou non de l'organe fonctionnel correspondant, afin d'éviter de déverrouiller l'accès au calculateur alors que l'organe fonctionnel est actif, ce qui pourrait poser des problèmes de cohérence de fonctionnement de celui-ci.

## Revendications

1. Procédé de déverrouillage de l'accès d'un outil de téléchargement d'un fichier, à un calculateur de pilotage du fonctionnement d'au moins un organe fonctionnel d'un véhicule automobile, dans lequel le fichier à télécharger comprend entre autres des informations d'identification du calculateur dans lequel il doit être téléchargé et une clef d'accès à celui-ci et le calculateur comporte une unité à microprocesseur (1) associée à des moyens de mémorisation (2) dans lesquels sont stockées des informations d'identification du calculateur et une clef d'accès à celui-ci, comportant les étapes de:
- transmission par le calculateur d'au moins certaines des informations d'identification stockées dans les moyens de mémorisation de celui-ci, à destination de l'outil de téléchargement ;
- vérification par l'outil de téléchargement de la cohérence entre les informations d'identification transmises par le calculateur et les informations d'identification correspondantes contenues dans le fichier à télécharger ;
- en cas de cohérence entre ces informations, génération par l'outil de téléchargement d'une demande de déverrouillage du calculateur ;
- en réponse à cette demande, génération par le calculateur, d'un nombre aléatoire (uuuu) et calcul à l'aide d'une relation déterminée, d'un premier code de déverrouillage (wwww) à partir de ce nombre aléatoire et de la clef d'accès stockée dans les moyens de mémorisation de celui-ci ;
- émission, par le calculateur à destination de l'outil de téléchargement, du nombre aléatoire (uuuu) ;
- calcul par celui-ci, à l'aide de la relation déterminée, d'un second code de déverrouillage (vvvv) à partir du nombre aléatoire (uuuu) foumi par le calculateur et de la clef d'accès contenue dans le fichier à télécharger ;
- transmission par l'outil de téléchargement de ce second code de déverrouillage (vvvv) à destination du calculateur ;
- comparaison par le calculateur des premier et second codes de déverrouillage ; et
- en cas de correspondance entre les premier et second codes, déverrouillage du calculateur, pour permettre l'accès à celui-ci par l'outil de téléchargement,
**caractérisé en ce qu'**il comporte l'étape supplémentaire d'enclenchement du fonctionnement de moyens temporisés d'inhibition du déverrouillage du calculateur pendant une période de temps prédéterminée, en cas de discordance entre les premier et second codes en bloquant tout échange d'informations du calculateur avec l'outil de téléchargement, pour imposer une temporisation correspondante entre deux tentatives de déverrouillage du calculateur.

2. Procédé selon la revendication 1, **caractérisé en ce que** les données d'identification du calculateur et la clef d'accès à celui-ci sont stockées dans une mémoire non volatile électriquement programmable des moyens de mémorisation (2) associés à l'unité à microprocesseur (1).

3. Procédé selon la revendication 1 ou 2, **caractérisé en ce que** les moyens temporisés comprennent un compteur intégré dans une mémoire non volatile des moyens de mémorisation (2) associés à l'unité à microprocesseur (1) et adapté pour décrémenter une temporisation.

4. Procédé selon l'une quelconque des revendications précédentes, **caractérisé en ce que** la clef est inopérante lorsque sa valeur est FFFF.

## Patentansprüche

1. Verfahren zum Entriegeln des Zugriffs von einer Fernladungsvorrichtung beziehungsweise Download-Vorrichtung einer Datei auf einen Steuerrechner der Funktion von wenigstens einer funktionellen Einrichtung eines Kraftfahrzeugs, bei welchem die femzuladende Datei unter anderem Informationen zur Identifizierung des Rechners, in den sie geladen werden soll, und einen Zugriffsschlüssel auf diesen enthält, und der Rechner eine Mikroprozessoreinheit (1) aufweist, welche mit Speichereinrichtungen (2) verbunden ist, in denen Informationen zur Identifikation des Rechners und ein Zugriffsschlüssel auf diesen gespeichert sind, wobei das Verfahren die folgenden Verfahrensschritte aufweist:
- Übertragen durch den Rechner an die Fernladungsvorrichtung von einer gewissen Mindestmenge der in den Speichereinrichtungen des Rechners gespeicherten Informationen zur Identifizierung;
- Prüfen der Übereinstimmung durch die Fernladungsvorrichtung der vom Rechner übertragenen Informationen zur Identifizierung mit den in der femzuladenden Datei enthaltenen zugehörigen Informationen zur Identifizierung;
- Erzeugen einer Anforderung zum Entriegeln des Rechners durch die Fernladungsvorrichtung im Fall der Übereinstimmung dieser Informationen;
- Erzeugen einer Zufallszahl (uuuu) als Antwort auf diese Anforderung und Berechnen eines ersten Entriegelungscodes (wwww) durch den Rechner mit Hilfe einer vorher festgelegten Relation ausgehend von dieser Zufallszahl und vom Zugriffsschlüssel, der in den Speichereinrichtungen des Rechners gespeichert ist;
- Senden der Zufallszahl (uuuu) durch den Rechner an die Fernladungsvorrichtung;
- Berechnen eines zweiten Entriegelungscodes (vvvv) durch diese mit Hilfe einer vorher festgelegten Relation ausgehend von dieser vom Rechner übertragenen Zufallszahl (uuuu) und vom Zugriffsschlüssel, der in der fernzuladenden Datei enthalten ist;
- Übertragen des zweiten Entriegelungscodes (vvvv) durch die Fernladungsvorrichtung an den Rechner;
- Vergleichen des ersten und zweiten Entriegelungscodes durch den Rechner; und
- Entriegeln des Rechners im Fall der Übereinstimmung des ersten und zweiten Entriegelungscodes zur Ermöglichung des Zugriffs auf den Rechner durch die Fernladungsvorrichtung,
**dadurch gekennzeichnet, dass** es den zusätzlichen Verfahrensschritt zum Einschalten der Funktion von Verzögerungseinrichtungen aufweist, die im Fall einer Nicht-Übereinstimmung des ersten und zweiten Codes zur Hemmung der Entriegelung des Rechners während eines vorher festgelegten Zeitabschnitts dienen, indem sie jeglichen Informationsaustausch zwischen dem Rechner und der Fernladungsvorrichtung sperren, um eine entsprechende Zeitverzögerung zwischen zwei Versuchen zur Entriegelung des Rechners einzufügen.

2. Verfahren nach Anspruch 1, **dadurch gekennzeichnet, dass** die Daten zur Identifizierung des Rechners und der Zugriffsschlüssel auf diesen in einem nicht flüchtigen, elektrisch programmierbaren Speicher der mit der Mikroprozessoreinheit (1) verbundenen Speichervorrichtungen (2) gespeichert sind.

3. Verfahren nach Anspruch 2 oder 3, **dadurch gekennzeichnet, dass** die Verzögerungseinrichtungen einen Zähler aufweisen, welcher in einem nicht flüchtigen Speicher der mit der Mikroprozessoreinheit (1) verbundenen Speichervorrichtungen (2) integriert und zum Verkleinern beziehungsweise Rückwärtszählen einer Verzögerungszeit ausgelegt ist.

4. Verfahren nach einem der vorangehenden Ansprüche, **dadurch gekennzeichnet, dass** der Schlüssel unwirksam ist, wenn sein Wert FFFF beträgt.

## Claims

1. A method of unlocking access to a computer controlling the operation of at least one functional unit of an automobile vehicle from a tool for downloading a file that contains information identifying the computer into which it must be downloaded and an access key to the computer and the computer includes a unit comprising a microprocessor (1) associated with memory means (2) in which information identifying the computer and an access key to the computer are stored, the method including the steps of:
- the computer sending at least some of the identification information stored in its memory means to the downloading tool;
- the downloading tool verifying that the identification information sent by the computer matches the corresponding identification information contained in the file to be downloaded;
- the downloading tool generating a computer unlocking request if the information matches;
- the computer generating a random number (uuuu) in response to said request and using a particular relation to calculate a first unlocking code (wwww) from said random number and the access key stored in the memory means of the computer;
- the computer sending the downloading tool the random number (uuuu);
- the downloading tool using the particular relation to calculate a second unlocking code (vvvv) from the random number (uuuu) supplied by the computer and the access key contained in the file to be downloaded;
- the downloading tool sending the second unlocking code (vvvv) to the computer;
- the computer comparing the first and second unlocking codes; and
- unlocking the computer to enable access thereto by the downloading tool if the first and second codes match, which method is **characterised in that** it includes the additional step of triggering the operation of means for inhibiting unlocking of the computer for a predetermined time period, after a time delay, if the first and second codes do not match, by blocking exchange of information between the computer and the downloading tool, so as to impose a corresponding time delay between two attempts to unlock the computer.

2. A method according to claim 1, **characterised in that** the data identifying the computer and the access key to the computer are stored in an electrically programmable non-volatile memory of the memory means (2) associated with the unit including the microprocessor (1).

3. A method according to claim 1 or claim 2, **characterised in that** the means for inhibiting unlocking of the computer for a predetermined time period, after a time delay, comprise a counter integrated into a non-volatile memory of the memory means (2) associated with the unit including the microprocessor (1) and adapted to decrement a time delay.

4. A method according to any preceding claim, **characterised in that** the key is inoperative if its value is FFFF.
